(19) Europäisches Patentamt
European Patent Office
Office européen des brevets

(11) EP 4 491 025 A1

(12) **EUROPEAN PATENT APPLICATION**
published in accordance with Art. 153(4) EPC

(43) Date of publication:
**15.01.2025 Bulletin 2025/03**

(21) Application number: **23766769.6**

(22) Date of filing: **06.03.2023**

(51) International Patent Classification (IPC):
***A01N 43/713*** *(2006.01)* ***A01G 7/06*** *(2006.01)*
***A01P 21/00*** *(2006.01)*

(52) Cooperative Patent Classification (CPC):
**A01G 7/06; A01N 43/713; A01P 21/00;** Y02A 40/10

(86) International application number:
**PCT/JP2023/008219**

(87) International publication number:
**WO 2023/171593 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2022 JP 2022034791**

(71) Applicant: **Nippon Soda Co., Ltd.**
**Tokyo 100-7010 (JP)**

(72) Inventors:
- **FUKUSHIMA, Yusuke**
  **Makinohara-shi, Shizuoka 421-0412 (JP)**
- **HORIKOSHI, Humberto Mitio**
  **Tokyo 100-7010 (JP)**
- **FUJITA, Daigo**
  **Tokyo 100-7010 (JP)**
- **YAMADA, Shigeo**
  **Makinohara-shi, Shizuoka 421-0412 (JP)**

(74) Representative: **Mewburn Ellis LLP**
**Aurora Building**
**Counterslip**
**Bristol BS1 6BX (GB)**

# (54) METHOD FOR REDUCING OR PREVENTING EFFECT OF SALT STRESS ON PLANT

(57) The present invention relates to a method for reducing or preventing influence of salt stress on a plant, the method comprising applying at least one compound selected from the group consisting of compounds of formula (I) and salts thereof to a plant exposed to salt stress or a plant potentially exposed to salt stress.

In formula (I), R represents a C1-C6 alkyl group, X represents a halogen group; n represents the number of Xs and is an integer of 0 to 2, wherein when n is 2 or more, Xs are the same as or different from each other; Y represents a halogen group; m represents the number of Ys and is an integer of 0 to 3, wherein when m is 2 or more, Ys are the same as or different from each other; and Z represents a C1-C8 alkyl group or a C1-C8 alkoxy group.

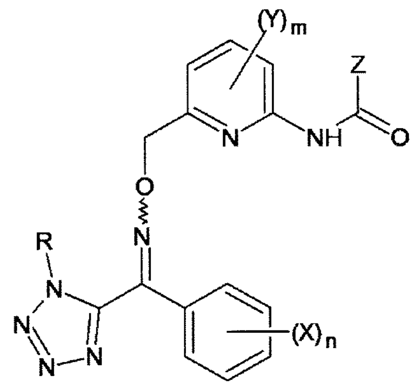

(I)

[Selected Drawing] Figure 14

[Fig. 14]

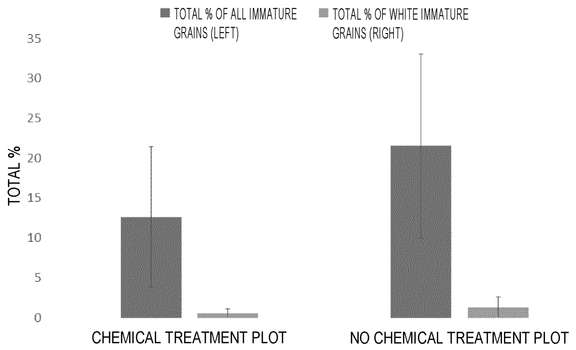
TOTAL % OF ALL IMMATURE GRAINS (LEFT)
TOTAL % OF WHITE IMMATURE GRAINS (RIGHT)
35
30
25
20
15
10
5
0
TOTAL %
CHEMICAL TREATMENT PLOT
NO CHEMICAL TREATMENT PLOT

## Description

## Technical Field

The present invention relates to a method for reducing or preventing influence of salt stress on a plant.
The application claims priority to Japanese Patent Application No. 2022-34791 filed on March 7, 2022, which is hereby incorporated herein by reference.

## Background Art

Salt stress is a state of cells and individuals under depression or tension, observed under environmental conditions in which soil salinity has shifted to the high concentration side from an optimum concentration for growth.
Salt stress is caused by the accumulation of salts, typically sodium chloride, and is observed not only in coastal areas into which seawater can flood and penetrate, but also in arid areas and in salt-accumulated soils that are artificially created by improper irrigation. The influence of salt stress appears noticeably as stunted growth and reduced productivity. It is desired to reduce or prevent such influence of salt stress on plants.
Meanwhile, Patent Document 1 discloses a safener for crops, containing hydroxyisoxazole or the like as an active ingredient. According to Patent Document 1, the safener is a composition for reducing chemical injury to crops, used in combination with an agricultural material for weed and pest control or used alone before or after the use of the agricultural material, and is used when known or unknown undesirable chemical injury to crops, such as growth injury, growth inhibition, growth suppression, appearance of brown spots, tiller suppression, etiolation, leaf blight, withering and death, wilting, chlorosis, twisting, browning, and root growth inhibition, are supposed with use of the agricultural material.
Patent Document 2 discloses a plant growth promoter containing a compound of formula (1-31) and a compound of formula (2-13) as active ingredients.

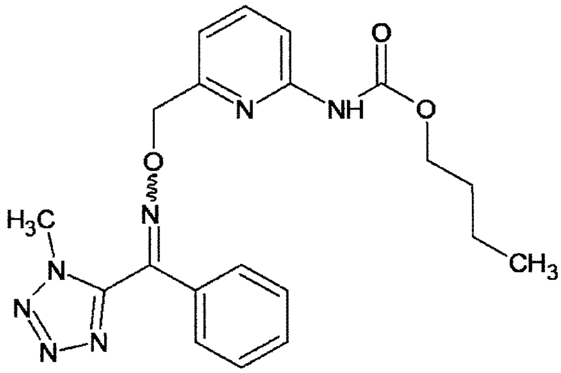

(1-31)

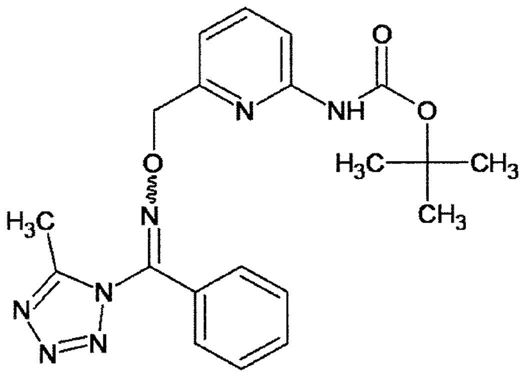

(2-13)

Patent Document 3 discloses a plant disease prevention and control agent containing a compound of formula (1)-7 as an active ingredient.

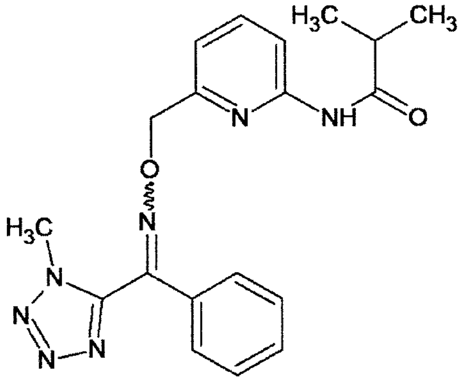

(1)-7

## Prior Art Documents

### Patent Documents

[Patent Document 1] WO 2019/163946 A1

[Patent Document 2] WO 2010/001563 A1

[Patent Document 3] WO 03/016303 A1

### Non-patent Documents

[Non-patent Document 1] "Graphical representation of stereochemical configuration", Pure and Applied Chemistry 78, 1897-1970, 2006 IUPAC

## Summary of the Invention

### Object to be Solved by the Invention

An object of the present invention is to provide a method for reducing or preventing influence of salt stress on a plant.

### Means to Solve the Object

The present invention includes the following embodiments.

[1] A method for reducing or preventing influence of salt stress on a plant, the method comprising applying at least one compound selected from the group consisting of compounds of formula (I):

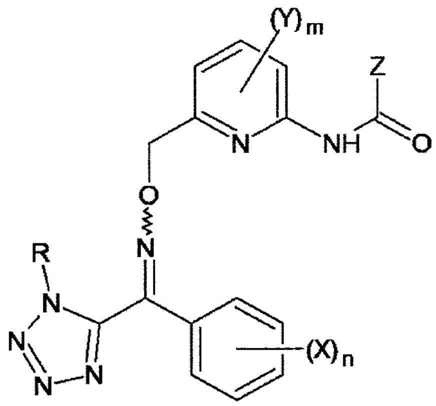

(I)

(wherein, in formula (I),

R represents a C1-C6 alkyl group,
X represents a halogen group,
n represents the number of Xs and is an integer of 0 to 2, wherein when n is 2 or more, Xs are the same as or different from each other,
Y represents a halogen group,
m represents the number of Ys and is an integer of 0 to 3, wherein when m is 2 or more, Ys are the same as or different from each other, and
Z represents a C1-C8 alkyl group or a C1-C8 alkoxy group)

and salts thereof, to a plant exposed to salt stress or a plant potentially exposed to salt stress.
[2] The method according to [1], wherein, in formula (I), R is a methyl group, n is 0, m is 0, and Z is a t-butoxy group.
[3] The method according to [1] or [2], wherein the application to the plant is performed by spraying the planted plant, pouring over soil in which the plant is planted, coating seeds of the plant, or adding to a water medium in which the plant is planted.
[4] A composition for reducing or preventing influence of salt stress on a plant, the composition comprising at least one compound selected from the group consisting of compounds of formula (I):

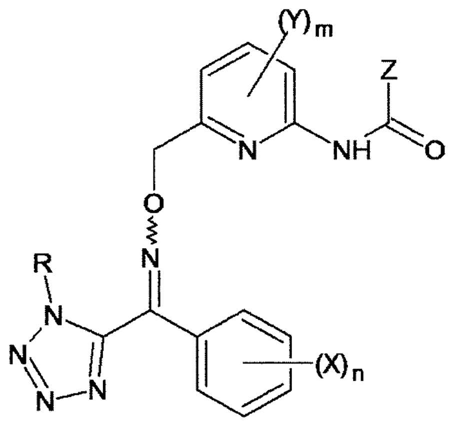

(I)

(wherein, in formula (I),

R represents a C1-C6 alkyl group,
X represents a halogen group,
n represents the number of Xs and is an integer of 0 to 2, wherein when n is 2 or more, Xs are the same as or different from each other,
Y represents a halogen group,
m represents the number of Ys and is an integer of 0 to 3, wherein when m is 2 or more, Ys are the same as or different from each other, and
Z represents a C1-C8 alkyl group or a C1-C8 alkoxy group)

and salts thereof.

[5] The composition according to [4], wherein, in formula (I), R is a methyl group, n is 0, m is 0, and Z is a t-butoxy group.

## Effect of the Invention

The present invention is expected to produce an effect of reducing or preventing influence of salt stress on plants. The present invention can improve the health of plant growth in soils in coastal areas into which seawater can flood and penetrate, or in salt-accumulated soils that are created in arid areas and that are artificially created by improper irrigation. The present invention can improve the quality and amount of crops even when subjected to salt stress.

## Brief Description of Drawings

[Figure 1] Figure 1 is a graph comparatively showing the amount of water decrease one day after Wagner pots were filled with water on the 68th day after sowing, with and without chemical treatment.

[Figure 2] Figure 2 is a graph comparatively showing the length of leaf tip blight on the 68th day after sowing, with and without chemical treatment.

[Figure 3] Figure 3 is a graph comparatively showing the number of withered, dead stems and the number of rolled leaves on the 68th day after sowing, with and without chemical treatment.

[Figure 4] Figure 4 is a graph comparatively showing the number of crown roots and the number of soil-surface roots on the 68th day after sowing, with and without chemical treatment.

[Figure 5] Figure 5 is a graph comparatively showing plant height and the number of stems 18 days after the start of heading (92 days after sowing), with and without chemical treatment.

[Figure 6] Figure 6 is a graph comparatively showing the number of days from sowing to the initial heading period, with and without chemical treatment.

[Figure 7] Figure 7 is a graph comparatively showing the number of ears 18 days (92 days after sowing) and 32 days (106 days after sowing) after the start of heading, with and without chemical treatment. In the figure, DAH represents the days elapsed from the start of heading (the 74th day after sowing), and each set of numerals in parentheses represents the date.

[Figure 8] Figure 8 is a graph comparatively showing the leaf color of flag leaves 10 days (84 days after sowing), 18 days (92 days after sowing), and 32 days (106 days after sowing) after the start of heading, with and without chemical treatment. The numerals over the respective bars are values indicated in SPAD. In the figure, DAH represents the days elapsed from the start of heading (the 74th day after sowing), and each set of numerals in parentheses represents the date.

[Figure 9] Figure 9 is a graph comparatively showing the number of ears, the ear length, and the culm length three weeks before harvesting, with and without chemical treatment.

[Figure 10] Figure 10 is a graph comparatively showing whitened unhulled rice index, the number of individuals with withered, dead flag leaves, and the number of individuals with injured flag leaves three weeks before harvesting, with and without chemical treatment. A whitened unhulled rice index is that per ear calculated from the following equation: Whitened unhulled rice index = $(A \times 1) + (B \times 0.5) + (C \times 0)$, wherein A: total number of unhulled rice grains whose whitened area accounts for 100% of the grain (fully whitened unhulled rice grains), B: total number of unhulled rice grains whose whitened area accounts for larger than 0% to less than 100% of the grain (partially whitened unhulled rice grains), and C: total number of unhulled rice grains whose whitened area accounts for 0% of the grain (green rice kernels).

[Figure 11] Figure 11 is a graph comparatively showing the weights of mature brown rice and its thousand grains of harvested rice, with and without chemical treatment.

[Figure 12] Figure 12 is a graph comparatively showing the total number of harvested rice grains, with and without chemical treatment.

[Figure 13] Figure 13 is a graph comparatively showing ripening percentage, with and without chemical treatment.

[Figure 14] Figure 14 is a graph comparatively showing the total percentage of all immature grains and the total percentage of white immature grains, with and without chemical treatment.

[Figure 15] Figure 15 is a graph showing temperatures in the period of Test Example 4.

## Mode of Carrying Out the Invention

A method, according to the present invention, for reducing or preventing influence of salt stress on a plant includes applying at least one compound selected from the group consisting of compounds of formula (I) (hereinafter may

be referred to as compound (I)) and salts thereof (hereinafter may be referred to as the salt of compound (I)) to a plant exposed to salt stress or a plant potentially exposed to salt stress.

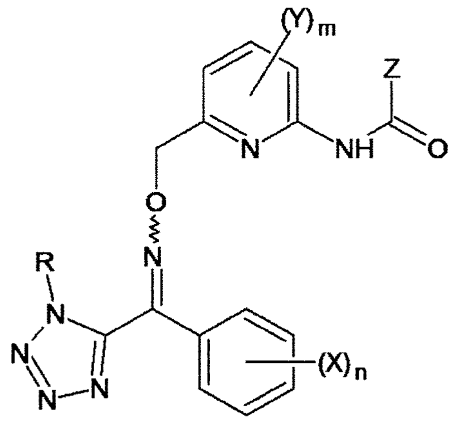

(I)

(wherein, in formula (I),

R represents a C1-C6 alkyl group,
X represents a halogen group,
n represents the number of Xs and is an integer of 0 to 2, wherein when n is 2 or more, Xs are the same as or different from each other,
Y represents a halogen group,
m represents the number of Ys and is an integer of 0 to 3, wherein when m is 2 or more, Ys are the same as or different from each other, and
Z represents a C1-C8 alkyl group or a C1-C8 alkoxy group).

In formula (I),
the wavy line: represents an undefined single stereo bond (see Non-patent Document 1).

The compound of formula (I) may be the E isomer, the Z isomer, or a mixture of the E isomer and the Z isomer. The mixture of the E isomer and the Z isomer may be isolated into either the E isomer or the Z isomer by separation and purification. The compound of formula (I) is preferably the Z isomer from the viewpoint of being more effective in reducing or preventing influence of salt stress on plants. In the natural environment, however, the E isomer can be converted into the Z isomer or the Z isomer into the E isomer by the action of light or other factors, and mixtures of the E isomer and the Z isomer tend to stabilize in a certain ratio. The ratio of the E isomer and the Z isomer for stabilization depends on the compound.

As the C1-C6 alkyl group represented by R in formula (I), a methyl group, an ethyl group, an n-propyl group, an isopropyl group, an n-butyl group, an isobutyl group, a s-butyl group, a t-butyl group, an amyl group, an isoamyl group, a s-amyl group, a t-amyl group, a hexyl group or the like may be exemplified. Among these groups, a methyl group is preferred. C1-C6 represents that the number of carbon atoms forming the group is 1 to 6.

As the halogen group represented by X in formula (I), a chlorine group, a bromine group, an iodine group, a fluorine group or the like may be exemplified. Among these halogen groups, a chlorine group or a fluorine group is preferred.
n represents the number of Xs and is an integer of 0 to 2. When n is 2 or more, Xs are the same as or different from each other. Preferably, n is 0.

As the halogen group represented by Y in formula (I), a chlorine group, a bromine group, an iodine group, a fluorine group or the like may be exemplified. Among these halogens, a chlorine or fluorine group is preferred.
m represents the number of Ys and is an integer of 0 to 3. When m is 2 or more, Ys are the same as or different from each other. Preferably, m is 0.

As the C1-C8 alkyl group represented by Z in formula (I), a methyl group, an ethyl group, an n-propyl group, an isopropyl group, an n-butyl group, an isobutyl group, a s-butyl group, a t-butyl group, an amyl group, an isoamyl group, a s-amyl group, a t-amyl group, a hexyl group, a heptyl group, an octyl group or the like may be exemplified. Among these groups, a butyl group is preferred. C1-C8 represents that the number of carbon atoms forming the group is 1 to 8.

As the C1-C8 alkoxy group represented by Z in formula (I), a methoxy group, an ethoxy group, an n-propoxy group, an isopropoxy group, an n-butoxy group, an isobutoxy group, a s-butoxy group, a t-butoxy group, an n-amyloxy group, an isoamyloxy group, a s-amyloxy group, a t-amyloxy group, a hexyloxy group, a heptoxy group, an octyloxy group or the like may be exemplified. Among these groups, a butoxy group, particularly a t-butoxy group, is preferred.

Particularly preferably, compound (I) is one in which R is a methyl group, n is 0, m is 0, and Z is a t-butoxy group (compound of formula (I)-1).

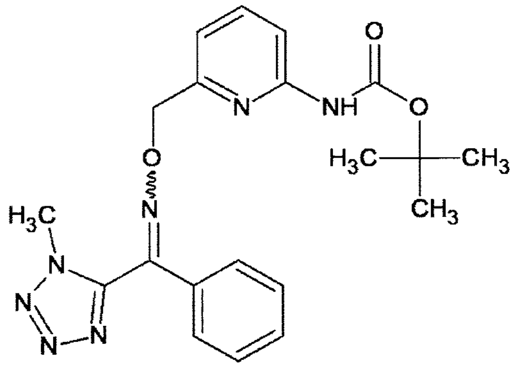

(I)-1

The salt of compound (I) is not particularly limited as long as it is agriculturally and horticulturally acceptable. Examples include a salt of an inorganic acid, such as hydrochloric acid or sulfuric acid; a salt of an organic acid, such as acetic acid or lactic acid; a salt of an alkali metal, such as lithium, sodium, or potassium; a salt of an alkaline-earth metal, such as calcium or magnesium; a salt of a transition metal, such as iron or copper; a salt of an organic base, such as triethylamine, tributylamine, pyridine, and hydrazine; and an ammonium salt.

Compound (I) or the salt of compound (I) is not particularly limited by its method for producing and may be obtained by using a known chemical reaction. The salt of compound (I) may be obtained from compound (I) using a known chemical reaction. Methods for producing compound (I) or a salt of compound (I) of the present invention include, for example, the method described in Patent Document 3.

Compound (I) and/or a salt of compound (I) to be applied may be the compound (I) and/or salt of compound (I) as it is, or a composition containing the compound (I) and/or salt of compound (I) (a composition for reducing or preventing influence of salt stress on a plant).

The composition for reducing or preventing influence of salt stress on a plant (hereinafter may be referred to as the composition of the present invention) contains as an active ingredient at least one compound selected from the group consisting of compounds of formula (I) and salts thereof. The composition of the present invention may contain other constituents in addition to the compound (I) and/or salt of compound (I). The amount of the compound (I) and/or salt of compound (I) in the composition of the present invention varies depending on the form of the formulation, the application method, and other conditions and is preferably 0.5% to 95% by mass, more preferably 2% to 70% by mass.

The composition of the present invention may contain, as other constituents, for example, a solid carrier, a liquid carrier, a dispersant, a diluent, an emulsifier, a spreader, a thickener, and an adjuvant that are conventionally used in the formulation. As the formulation, a wettable powder, a liquid formulation, an oil formulation, a powder formulation, a granular formulation, a suspension concentrate(flowable) or the like may be exemplified.

As the solid carrier or liquid carrier, talc, clay, bentonite, kaolin, siliceous earth, montmorillonite, mica, vermiculite, gypsum, calcium carbonate, white carbon, wood powder, starch, alumina, silicate, glycopolymer, a wax, water, an alcohol (methyl alcohol, ethyl alcohol, n-propyl alcohol, isopropyl alcohol, n-butyl alcohol, ethylene glycol, benzyl alcohol or the like), a petroleum fraction (petroleum ether, kerosene, solvent naphtha or the like), an aliphatic or alicyclic hydrocarbon (n-hexane, cyclohexane or the like), an aromatic hydrocarbon (benzene, toluene, xylene, ethylbenzene, chlorobenzene, cumene, methylnaphthalene or the like), a halogenated hydrocarbon (chloroform, dichloromethane or the like), an ether (isopropyl ether, ethylene oxide, tetrahydrofuran or the like), a ketone (acetone, methyl ethyl ketone, cyclohexanone, methyl isobutyl ketone or the like), an ester (ethyl acetate, butyl acetate, ethylene glycol acetate, amyl acetate or the like), an acid amide (dimethylformamide, dimethylacetoanilide or the like), a nitrile (acetonitrile, propionitrile, acrylonitrile or the like), a sulfoxide (dimethyl sulfoxide or the like), an alcohol ether (ethylene glycol monomethyl ether, ethylene glycol monoethyl ether or the like) or the like may be exemplified.

As the adjuvant, a nonionic surfactant (polyoxyethylene alkyl ether, polyoxyethylene alkyl ester, polyoxyethylene alkyl phenyl ether, polyoxyethylene sorbitan alkyl ester, sorbitan alkyl ester or the like), an anionic surfactant (alkylbenzenesulfonate, alkyl sulfosuccinate, polyoxyethylene alkyl sulfate, arylsulfonate or the like), a cationic surfactant (an alkylamine, a polyoxyethylene alkylamine, a quaternary ammonium salt or the like), an amphoteric surfactant (alkylaminoethylglycine, alkyl dimethyl betaine or the like), polyvinyl alcohol, hydroxypropyl cellulose, carboxymethyl cellulose, gum arabic, tragacanth gum, xanthan gum, polyvinyl acetate, gelatin, casein, sodium alginate or the like may be exemplified.

The composition of the present invention may contain a known agricultural chemical, a known fertilizer, or the like as other constituents. As the agricultural chemical, an agricultural and horticultural fungicide, a plant growth regulator, an

insecticide, a miticide or the like may be exemplified.

Sensitivity to salt stress varies among plant species and also varies among the individuals of the same species depending on their growth stage. Additionally, the sensitivity is affected by weather conditions, such as temperature, humidity, and illuminance, and physicochemical environmental conditions, such as the type of salt and the state of soil moisture. The plant to which the present invention is applied can be a plant exposed to salt stress or a plant potentially exposed to salt stress and is otherwise not particularly limited. As the plant to which the present invention is applied, a Poaceae cereal, such as rice, barley, wheat, Japanese millet, corn, or foxtail millet; a vegetable, such as pumpkin, turnip, cabbage, radish, Chinese cabbage, spinach, sweet pepper, or tomato; a flowering plant, such as chrysanthemum, gerbera, pansy, orchid, peony, or tulip; a bean, such as azuki bean, common bean, soybean, peanut, broad bean, or pea; a tuber crop, such as potato, sweet potato, dasheen, yam, or taro; an onion, such as bunching onion, bulb onion, or rakkyo, or the like may be exemplified.

The application to a plant may be directly or indirectly performed on the plant. As the application to a plant, spray or application to a planted plant (stems, leaves, or the like), spray or pouring over or mixing with the soil in which the plant is planted, spray to seeds (seeds, bulbs, or the like) of the plant or coating seeds, spray or addition to the water medium in which the plant is planted, or the like may be exemplified.

The amount of application varies depending on the plant to be applied, growing environment, and the like. For example, foliar spray is performed preferably by applying 50 L to 300 L of a solution per 10 ares with an active ingredient concentration of preferably 1 ppm to 10000 ppm, more preferably 10 ppm to 1000 ppm. Soil application and water-surface application are performed preferably by applying 0.1 g to 1000 g, particularly preferably 10 g to 100 g, of active ingredient per 10 ares. Also, seed application is performed preferably by applying 0.001 g to 50 g of active ingredient per 1 kg of seeds. It is, therefore, preferable to dilute the composition of the present invention with water to a desired concentration when the composition is applied.

The effect of the present invention will now be described in detail with reference to test examples. However, the scope of the present invention is not limited by the test examples.

(Test Example 1) Wheat Seeds

A flowable agent containing 10% of the compound of formula (I)-1 was diluted $10^3$ times and $10^4$ times with water to obtain chemical solution 1a and chemical solution 1b, respectively.

Eight layers of filter paper were placed at the center of a laboratory dish, and seeds (six seeds) of wheat (Norin 61) were placed on the filter paper. Four of these were prepared.

(1) 125 mM sodium chloride and 10 mL of chemical solution 1a were poured into the laboratory dish (Example 1a).
(2) 125 mM sodium chloride and 10 mL of chemical solution 1b were poured into the laboratory dish (Example 1b).
(3) 125 mM sodium chloride and 10 mL of water were poured into the laboratory dish (Comparative Example 1a).
(4) 10 mL of water was poured into the laboratory dish (Comparative Example 1b).

Each laboratory dish was placed in a growth chamber set at 25°C and light/dark = 16/8. After 6 days, the number of roots, the root length, and the foliage length were measured for six seeds in each of (1) to (4). The average in each measurement and the recovery percentages are presented in Table 1.

The recovery percentage was calculated from the following equation:

$$(X - Y) / (Z - Y) \times 100$$

X: Chemical treatment, sodium chloride applied
Y: No chemical treatment, sodium chloride applied
Z: No chemical treatment, no sodium chloride treatment

Table 1

| | Number of roots | Root | | Foliage | |
|---|---|---|---|---|---|
| | | Length | Recovery percentage | Length | Recovery percentage |
| Example 1a | 5.6 | 49.6 mm | 8.1% | 68.8 mm | 31.0% |
| Example 1b | 5.2 | 50.2 mm | 9.1% | 64.2 mm | 15.8% |
| Comparative Example 1a | 5.7 | 45.2 mm | 0.0% | 59.3 mm | 0.0% |

(continued)

| | Number of roots | Root | | Foliage | |
|---|---|---|---|---|---|
| | | Length | Recovery percentage | Length | Recovery percentage |
| Comparative Example 1b | 5.3 | 99.8 mm | - | 89.8 mm | - |

Examples 1a and 1b, which were subjected to salt stress using the compound of formula (I)-1 of the present invention, exhibited more recovery than Comparative Example 1a, which was subjected to salt stress without using the compound of formula (I)-1.

(Test Example 2) Corn Seeds

A flowable agent containing 10% of the compound of formula (I)-1 was diluted $10^6$ times with water to obtain chemical solution 2a.

Eight layers of filter paper were placed at the center of a laboratory dish, and seeds (five seeds) of corn (P2307) were placed on the filter paper. Four of these were prepared.

(1) 125 mM sodium chloride and 10 mL of chemical solution 2a were poured into the laboratory dish (Example 2a).
(2) 125 mM sodium chloride and 10 mL of water were poured into the laboratory dish (Comparative Example 2a).
(3) 10 mL of water was poured into the laboratory dish (Comparative Example 2b).

Each laboratory dish was placed in a growth chamber set at 25°C and light/dark = 16/8. After 4 days, the number of roots, the root length, and the foliage length were measured for five seeds in each of (1) to (3). The average in each measurement and the recovery percentages are presented in Table 2. The recovery percentage was calculated in the same manner as in Test Example 1.

Table 2

| | Number of roots | Root | | Foliage | |
|---|---|---|---|---|---|
| | | Length | Recovery percentage | Length | Recovery percentage |
| Example 2a | 5.2 | 38.6 mm | 33.8% | 17.2 mm | 28.3% |
| Comparative Example 2a | 4.6 | 26.4 mm | 0.0% | 14.6 mm | 0.0% |
| Comparative Example 2b | 4.8 | 62.5 mm | - | 23.8 mm | - |

Example 2a, which was subjected to salt stress using the compound of formula (I)-1 of the present invention, exhibited more recovery than Comparative Example 2a, which was subjected to salt stress without using the compound of formula (I)-1.

(Test Example 3) Wheat Seeds

A flowable agent containing 10% of the compound of formula (I)-1 was diluted $10^5$ times and $10^7$ times with water to obtain chemical solution 3a and chemical solution 3b, respectively.

Eight layers of filter paper were placed at the center of a laboratory dish, and seeds (six seeds) of wheat (Norin 61) were placed on the filter paper. Four of these were prepared.

(1) 125 mM sodium chloride and 10 mL of chemical solution 2a were poured into the laboratory dish (Example 3a).
(2) 125 mM sodium chloride and 10 mL of chemical solution 2b were poured into the laboratory dish (Example 3b).
(3) 125 mM sodium chloride and 10 mL of water were poured into the laboratory dish (Comparative Example 3a).
(4) 10 mL of water was poured into the laboratory dish (Comparative Example 3b).

Each laboratory dish was placed in a growth chamber set at 25°C and light/dark = 16/8. After 4 days, the number of roots, the root length, and the foliage length were measured for five seeds in each of (1) to (4). The average in each measurement and the recovery percentages are presented in Table 3. The recovery percentage was calculated in the same manner as in Test Example 1.

Table 3

| | Number of roots | Root | | Foliage | |
|---|---|---|---|---|---|
| | | Length | Recovery percentage | Length | Recovery percentage |
| Example 3a | 4.0 | 30.8 mm | 41.8% | 23.3 mm | 0.0% |
| Example 3b | 4.0 | 29.0 mm | 19.0% | 25.0 mm | 0.0% |
| Comparative Example 3a | 4.8 | 27.5 mm | 0.0% | 28.2 mm | 0.0% |
| Comparative Example 3b | 5.0 | 35.4 mm | - | 49.4 mm | - |

Examples 3a and 3b, which were subjected to salt stress using the compound of formula (I)-1 of the present invention, exhibited more recovery in the root than Comparative Example 3a, which was subjected to salt stress without using the compound of formula (I)-1.

(Test Example 4) Rice

In the middle of June, Arakidatsuchi (2 mm sieved, Akagi Engei) was placed in a Wagner pot (1/5000 a), and five grains of dried seed rice (Koshihikari: *Oryza sativa*) were sown at the center of the Wagner pot at a sowing depth of 3 mm to 5 mm, thus starting raising by direct seeding under submerged conditions. Individuals except for one well-grown individual from which 2 to 3 tillers appeared were cut for thinning with scissors on the 28th day after sowing. Ten pots of these were prepared.

Midseason drainage was performed on the 47th to 49th day after sowing. A flowable agent containing 10% of the compound of formula (I)-1 was diluted $10^3$ times with water to obtain chemical solution 4. Chemical solution 4 in a volume of 56 mL (equivalent to 0.28 g ai/2.8 L/$m^2$; 280 g ai per 10 a) was dropped to five pots under submerged conditions (chemical treatment) on the 50th day after sowing. The raising was further continued together with the other five pots (no chemical treatment).

10 g/L Sodium chloride aqueous solution a was prepared. Aqueous solution a was allowed to flow into the two pots to which chemical solution 4 had been dropped under submerged conditions and two pots to which chemical solution 4 was not dropped under submerged conditions on the 57th day after sowing (Example 4a and Comparative Example 4a).

On the 58th, 59th, 65th, 66th, 72nd, 73rd, 79th, and 80th days after sowing, tap water was allowed to flow into the pots. On the other days, aqueous solution a continued to flow into the pots until the 84th day after sowing. From the 85th day after sowing, tap water was allowed to flow into the pots. The flowering period was reached on the 81st day after sowing.

The number of withered, dead stems, the number of rolled leaves, the number of crown roots, the amount of water decrease, and the length of leaf tip blight were measured on the 68th day after sowing. (Figures 1 to 4)

The plant height, the number of stems, the culm length, the number of ears, the ear length, the number of whitened unhulled rice grains, the leaf color of flag leaves, and the numbers of flag leaf blights and withered, dead leaves were measured in the heading period or after. (Figures 5 to 8)

The culm length, the number of ears, the ear length, the number of whitened unhulled rice grains, the leaf color of flag leaves, and the numbers of flag leaf blights and withered, dead leaves were measured on the 106th day after sowing. (Figures 9 and 10)

On the 126th day after sowing, rice was harvested with scissors, dried in a greenhouse for about one week, and threshed into unhulled rice grains with a yield estimation-intended threshing machine. Then, brown rice was obtained using a hulling machine for testing. The weights of crude brown rice and mature brown rice, the total number of grains, the percentage of immature grains, and the ripening percentage (sorting with saline solution with a specific gravity of 1.06) were measured. (Figures 11 to 14)

Tables 1 to 15 present the results of the above measurements.

Example 4a, which was subjected to salt stress using the compound of formula (I)-1 of the present invention, exhibited better values than Comparative Example 4a, which was subjected to salt stress without using the compound of formula (I)-1 in many measurements.

The same effect was observed in a test in which 2 g/L sodium chloride aqueous solution was dropped to apply 28 g ai per 10 a under submerged conditions.

(Test Example 5) Corn, Soybean

(1) Example 5a: 8 g/L sodium chloride solution and chemical solution 5a were poured.

(2) Comparative Example 5a: 8 g/L sodium chloride solution and water were poured.
(3) Comparative Example 5b: Water was poured.

Plastic pots were filled with Kannami soil, and seeds of edible corn (Idaho Sweet 88) and soybean (Enrei) were sowed in their respective pots, three seeds for each pot (3 cm in depth). Each test was repeated three times. The plants were grown with subirrigation in a greenhouse.

A flowable agent containing 5% of the compound of formula (I)-1 was diluted $10^3$ times with water to prepare chemical solution 5, and 17.3 mL of this chemical solution was poured for each pot on the 8th day after sowing (only Example 5a).

After the chemical treatment, with a pot without holes placed at the bottom, tap water was misted from above on weekends and holidays, and 50 mL of tap water was poured over the soil for each pot every weekday.

From the 11th day after sowing, 8 g/L sodium chloride solution was poured over the soil, 50 mL for each pot, every day (only Example 5a and Comparative Example 5a).

On the 19th day after sowing, the largest root length (cm), the plant height (cm), and the top and root dry weights (g) were measured.

Table 4 presents the results.

[Table 4]

| | | Root length | | | | Plant height | | | | Top dry weight | | | | Root dry weight | | | |
|---|---|---|---|---|---|---|---|---|---|---|---|---|---|---|---|---|---|
| Chemical name | Salt treatment | Corn | | Soybean | | Corn | | Soybean | | Corn | | Soybean | | Corn | | Soybean | |
| | | cm | A | cm | A | cm | A | cm | A | g | A | g | A | g | A | g | A |
| Example 5a | 8g/L NaCl | 17.3 | 96 | 14.3 | 105 | 37.0 | 91 | 48.3 | 101 | 0.40 | 83 | 0.72 | 91 | 0.10 | 90 | 0.15 | 72 |
| Comparative Example 5a | | 14.7 | 81 | 11.7 | 85 | 32.3 | 80 | 39.7 | 83 | 0.27 | 57 | 0.59 | 75 | 0.07 | 66 | 0.12 | 57 |
| Comparative Example 5b | None | 18.0 | 100 | 13.7 | 100 | 40.7 | 100 | 47.7 | 100 | 0.48 | 100 | 0.79 | 100 | 0.11 | 100 | 0.21 | 100 |
| **A: number relative to 100 of Comparative Example 5b** | | | | | | | | | | | | | | | | | |

In Example 5a, which was subjected to salt stress using the compound of formula (I)-1 according to the present invention, corn and soybean each exhibited better values than those in Comparative Example 5a, which was subjected to salt stress without using the compound of formula (I)-1.

(Test Example 6) Wheat

(1) Example 6a: 8 g/L sodium chloride solution and chemical solution 6a were poured.
(2) Comparative Example 6a: 8 g/L sodium chloride solution and water were poured.
(3) Comparative Example 6b: Water was poured. Plastic pots were filled with Kannami soil, and five seeds of wheat (variety: Kitahonami) were sowed at the center of each pot (3 cm in depth). Each test was repeated three times.

After sowing, the pots were allowed to stand in a growth chamber (20°C dark room) for 4 days and then moved to a greenhouse.
A flowable agent containing 5% of a compound of formula (I)-1 was diluted $10^3$ times with water to prepare chemical solution 6, and 17.3 mL of this chemical solution was poured for each pot on the 7th day after sowing (only Example 6a).
From the 10th day after sowing, 8 g/L sodium chloride solution was poured over the soil, 30 mL for each pot, once a day (only Example 6a and Comparative Example 6a).
On the 17th day after sowing, the largest root length (cm), the number of rooted individuals, the plant height (cm), and the top and root dry weights (g) were measured.
Table 5 presents the results.

[Table 5]

| | | Largest root length | | Number of rooted individuals | | Plant height | | Top dry weight | | Root dry weight | |
|---|---|---|---|---|---|---|---|---|---|---|---|
| Chemical name | Salt treatment | Wheat | | | | | | | | | |
| | | cm | A | Number | A | cm | A | g | A | g | A |
| Example 6a | 8g/L NaCl | 18.3 | 100 | 8.0 | 104 | 29.3 | 98 | 0.059 | 96 | 0.034 | 94 |
| Comparative Example 6a | | 19.0 | 104 | 5.7 | 74 | 28.0 | 93 | 0.060 | 98 | 0.025 | 68 |
| Comparative Example 6b | None | 18.3 | 100 | 7.7 | 100 | 30.0 | 100 | 0.062 | 100 | 0.036 | 100 |
| **A: number relative to 100 of Comparative Example 6b** | | | | | | | | | | | |

In Example 6a, which was subjected to salt stress using the compound of formula (I)-1 according to the present invention, the number of rooted individuals, the plant height, and the root dry weight were better than those in Comparative Example 6a, which was subjected to salt stress without using the compound of formula (I)-1.
The above shows that the present invention can reduce or prevent influence of salt stress on plants.

## Claims

1. A method for reducing or preventing influence of salt stress on a plant, the method comprising applying at least one compound selected from the group consisting of compounds of formula (I):

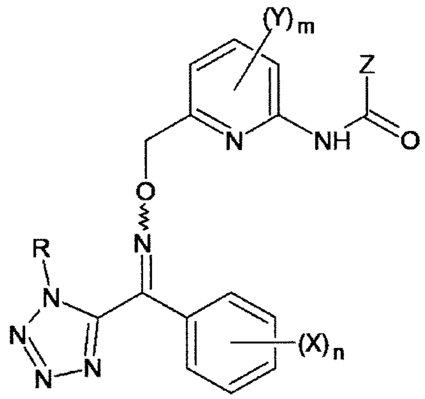

(I)

(wherein, in formula (I),

R represents a C1-C6 alkyl group,
X represents a halogen group,
n represents the number of Xs and is an integer of 0 to 2, wherein when n is 2 or more, Xs are the same as or different from each other,
Y represents a halogen group,
m represents the number of Ys and is an integer of 0 to 3, wherein when m is 2 or more, Ys are the same as or different from each other, and
Z represents a C1-C8 alkyl group or a C1-C8 alkoxy group)
and salts thereof, to a plant exposed to salt stress or a plant potentially exposed to salt stress.

2. The method according to claim 1, wherein, in formula (I), R is a methyl group, n is 0, m is 0, and Z is a t-butoxy group.

3. The method according to claim 1 or 2, wherein the application to the plant is performed by spraying the planted plant, pouring over soil in which the plant is planted, coating seeds of the plant, or adding to a water medium in which the plant is planted.

4. A composition for reducing or preventing influence of salt stress on a plant, the composition comprising at least one compound selected from the group consisting of compounds of formula (I):

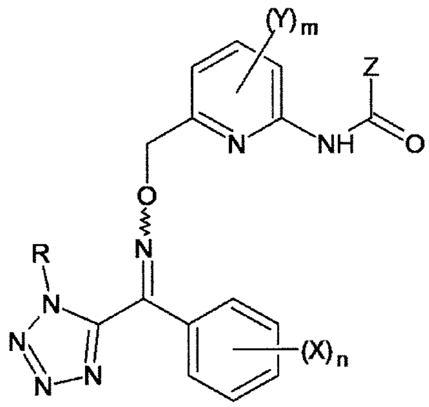

(I)

(wherein, in formula (I),

R represents a C1-C6 alkyl group,
X represents a halogen group,
n represents the number of Xs and is an integer of 0 to 2, wherein when n is 2 or more, Xs are the same as or different from each other,
Y represents a halogen group,
m represents the number of Ys and is an integer of 0 to 3, wherein when m is 2 or more, Ys are the same as or

different from each other, and
Z represents a C1-C8 alkyl group or a C1-C8 alkoxy group)
and salts thereof, as active ingredient.

**5.** The composition according claim 4, wherein, in formula (I), R is a methyl group, n is 0, m is 0, and Z is a t-butoxy group.

[Fig. 1]

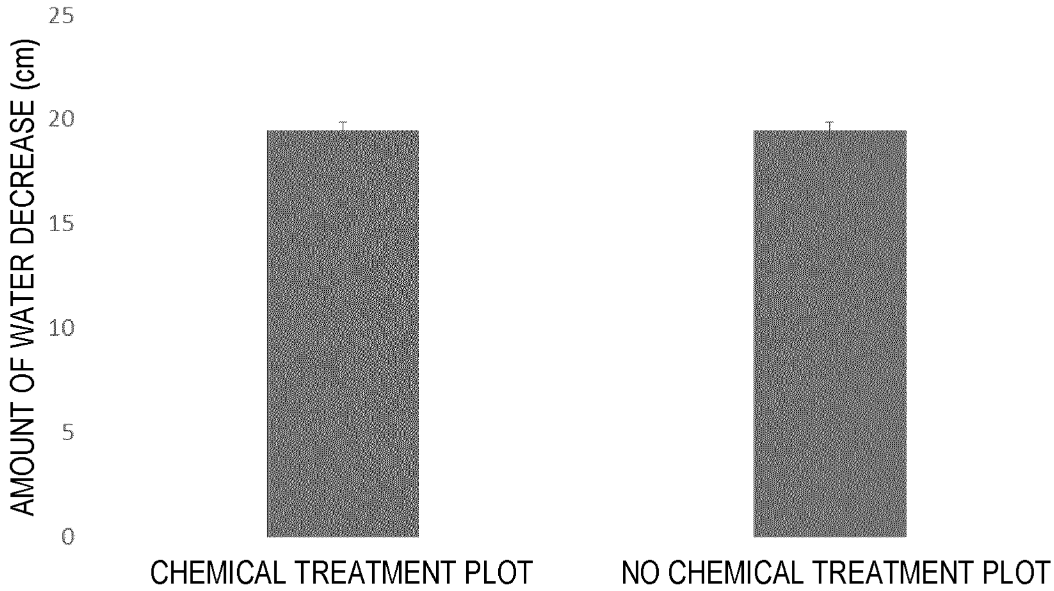
AMOUNT OF WATER DECREASE (cm)
0
5
10
15
20
25
CHEMICAL TREATMENT PLOT
NO CHEMICAL TREATMENT PLOT

[Fig. 2]

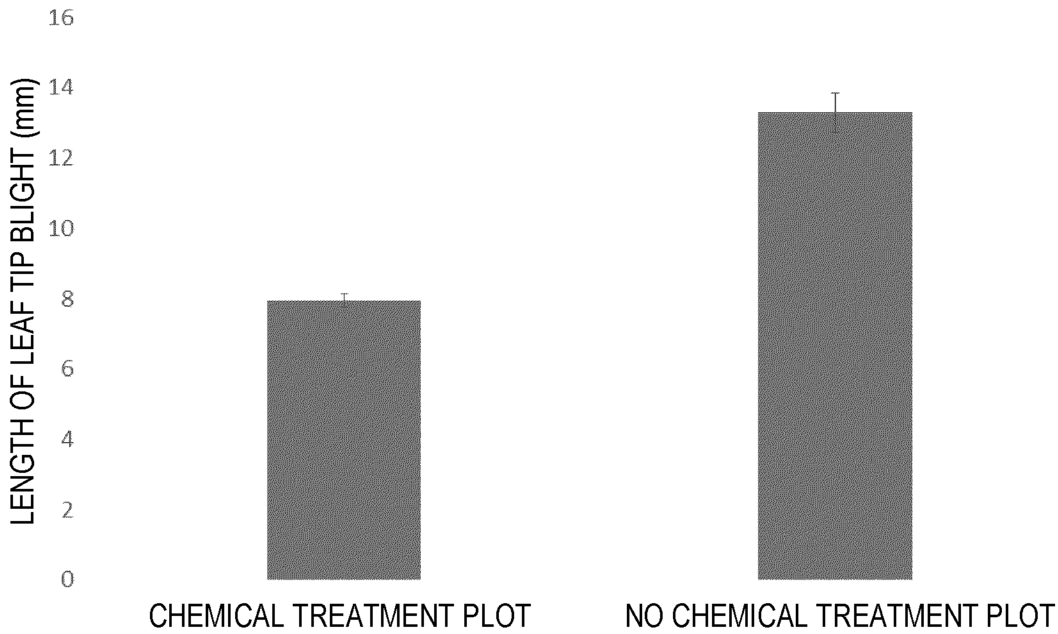
LENGTH OF LEAF TIP BLIGHT (mm)
0
2
4
6
8
10
12
14
16
CHEMICAL TREATMENT PLOT
NO CHEMICAL TREATMENT PLOT

[Fig. 3]

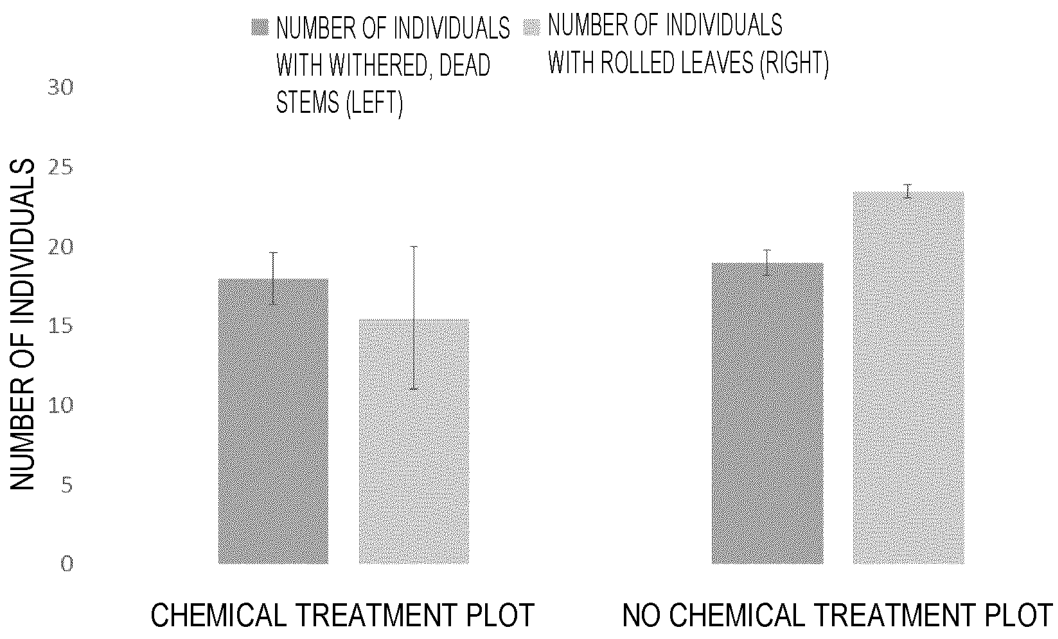
NUMBER OF INDIVIDUALS WITH WITHERED, DEAD STEMS (LEFT)
NUMBER OF INDIVIDUALS WITH ROLLED LEAVES (RIGHT)
NUMBER OF INDIVIDUALS
30
25
20
15
10
5
0
CHEMICAL TREATMENT PLOT
NO CHEMICAL TREATMENT PLOT

[Fig. 4]

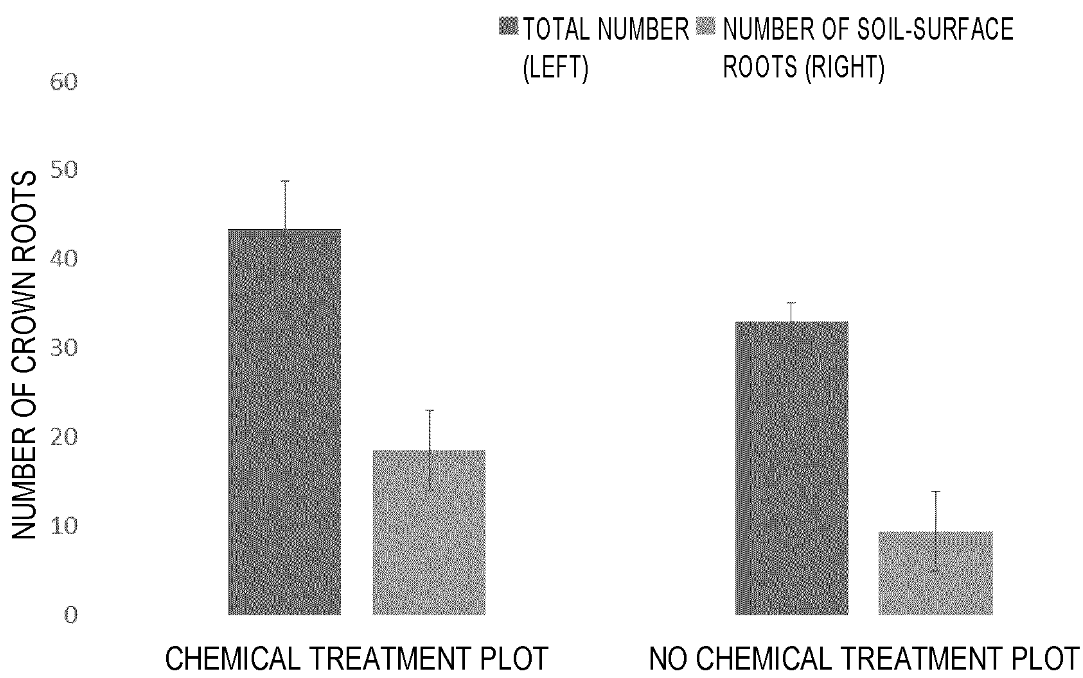
TOTAL NUMBER (LEFT)
NUMBER OF SOIL-SURFACE ROOTS (RIGHT)
NUMBER OF CROWN ROOTS
60
50
40
30
20
10
0
CHEMICAL TREATMENT PLOT
NO CHEMICAL TREATMENT PLOT

[Fig. 5]

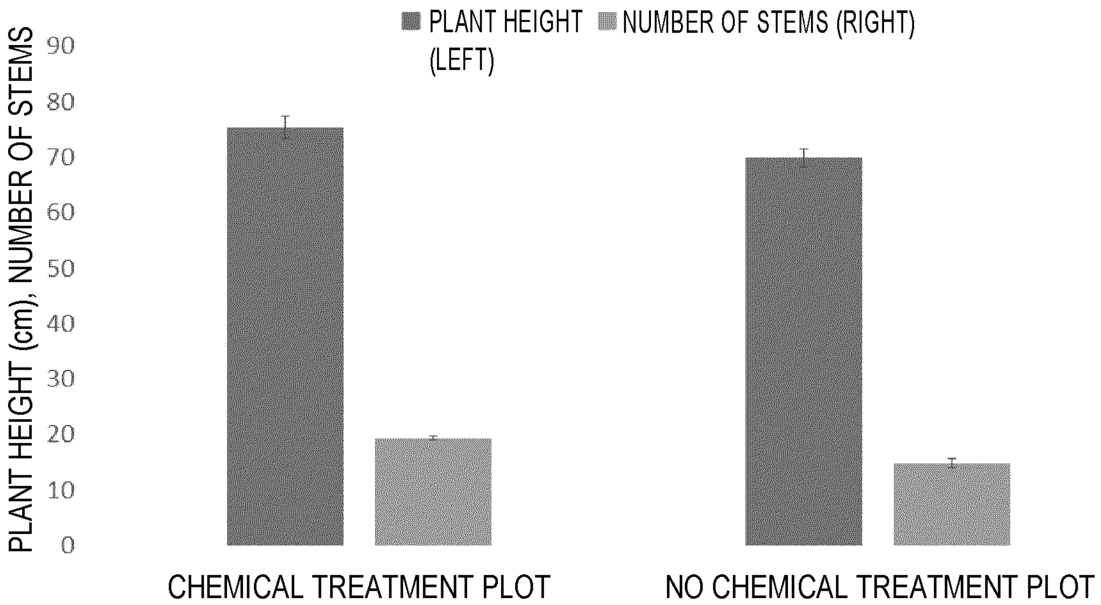
PLANT HEIGHT (LEFT)
NUMBER OF STEMS (RIGHT)
PLANT HEIGHT (cm), NUMBER OF STEMS
90
80
70
60
50
40
30
20
10
0
CHEMICAL TREATMENT PLOT
NO CHEMICAL TREATMENT PLOT

[Fig. 6]

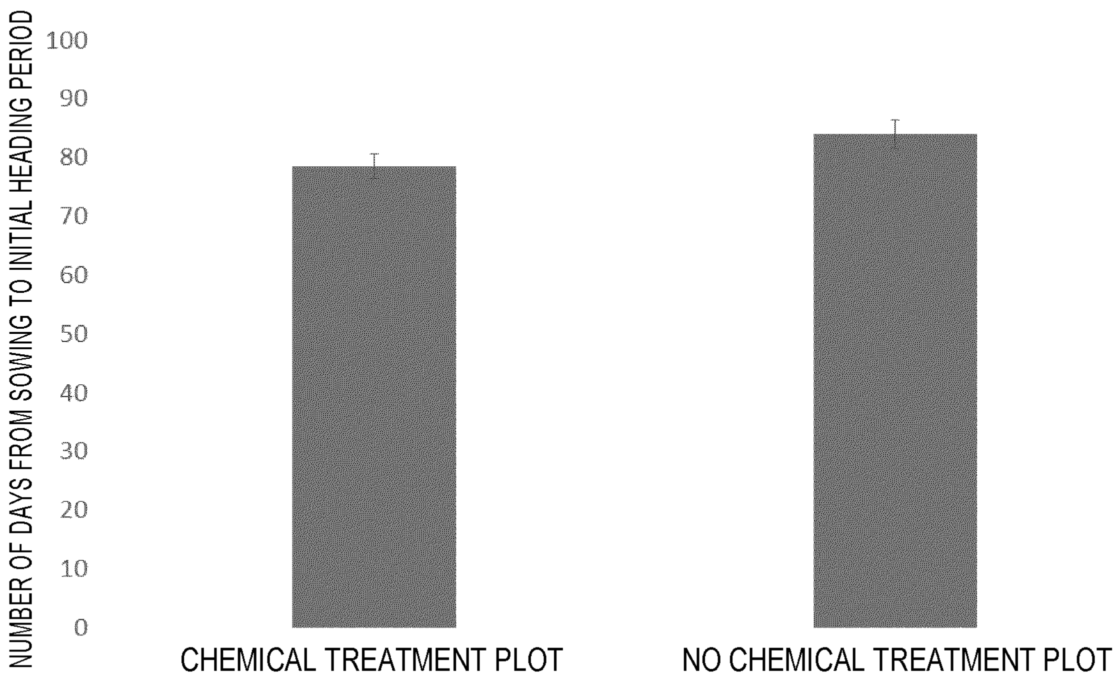
NUMBER OF DAYS FROM SOWING TO INITIAL HEADING PERIOD
100
90
80
70
60
50
40
30
20
10
0
CHEMICAL TREATMENT PLOT
NO CHEMICAL TREATMENT PLOT

[Fig. 7]

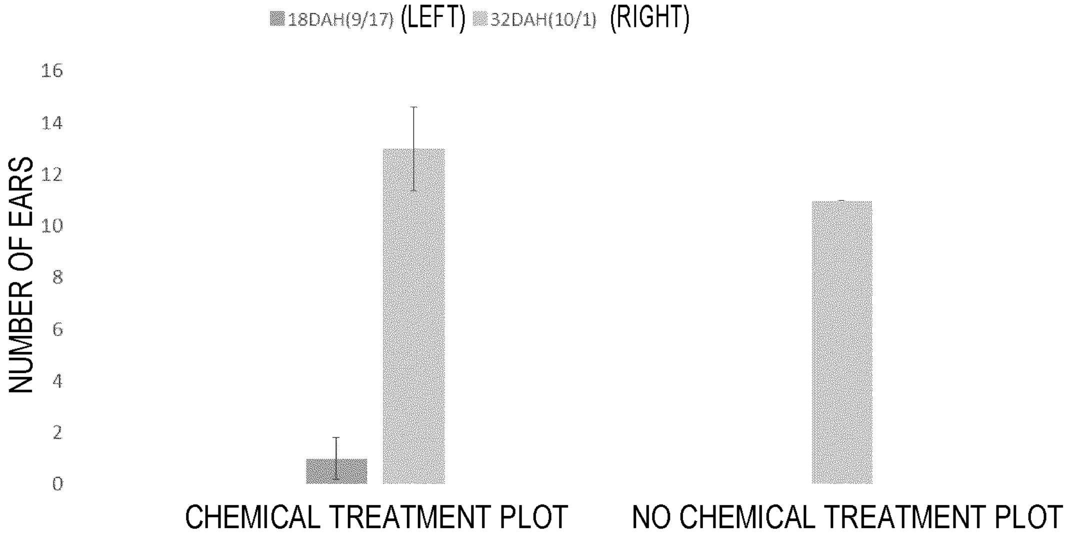
18DAH(9/17) (LEFT) 32DAH(10/1) (RIGHT)
NUMBER OF EARS
16
14
12
10
8
6
4
2
0
CHEMICAL TREATMENT PLOT
NO CHEMICAL TREATMENT PLOT

[Fig. 8]

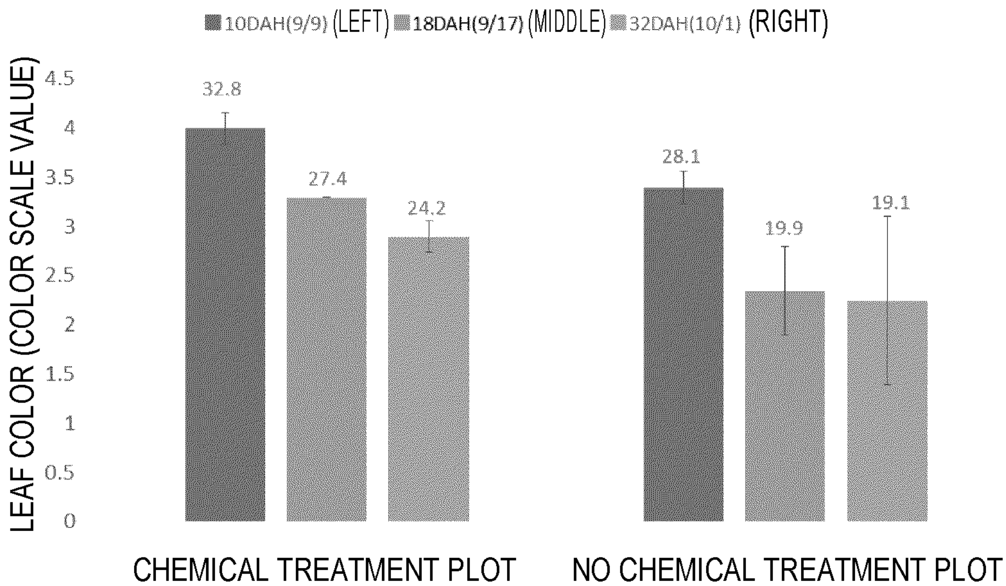
10DAH(9/9) (LEFT) 18DAH(9/17) (MIDDLE) 32DAH(10/1) (RIGHT)
LEAF COLOR (COLOR SCALE VALUE)
4.5
4
3.5
3
2.5
2
1.5
1
0.5
0
32.8
27.4
24.2
28.1
19.9
19.1
CHEMICAL TREATMENT PLOT
NO CHEMICAL TREATMENT PLOT

[Fig. 9]

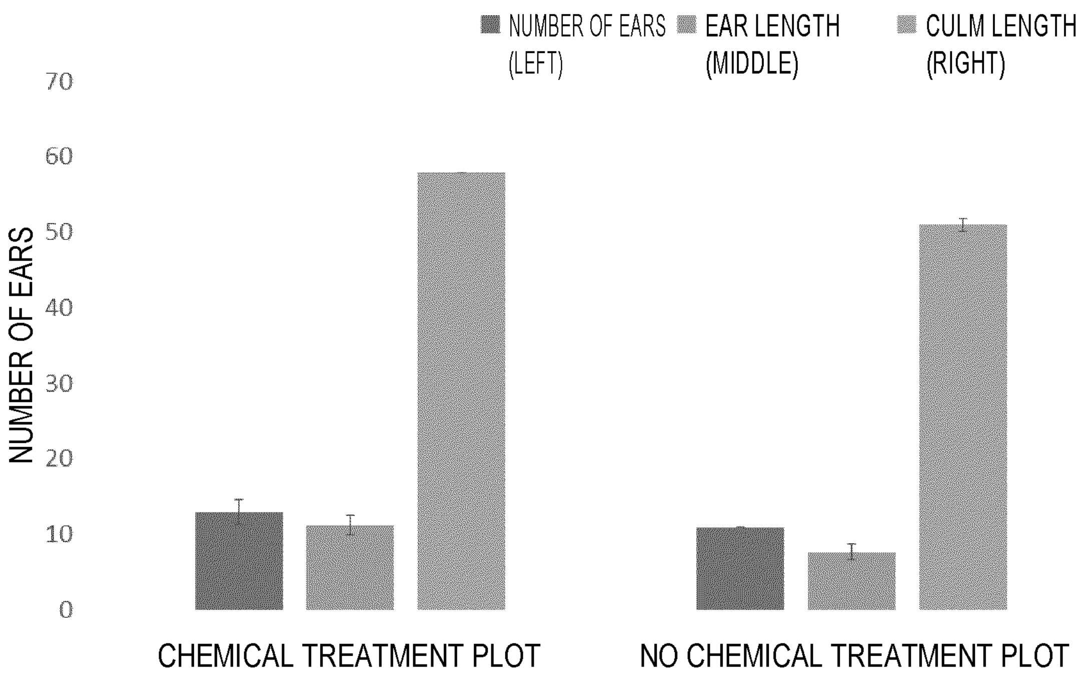
NUMBER OF EARS (LEFT)
EAR LENGTH (MIDDLE)
CULM LENGTH (RIGHT)
NUMBER OF EARS
70
60
50
40
30
20
10
0
CHEMICAL TREATMENT PLOT
NO CHEMICAL TREATMENT PLOT

[Fig. 10]

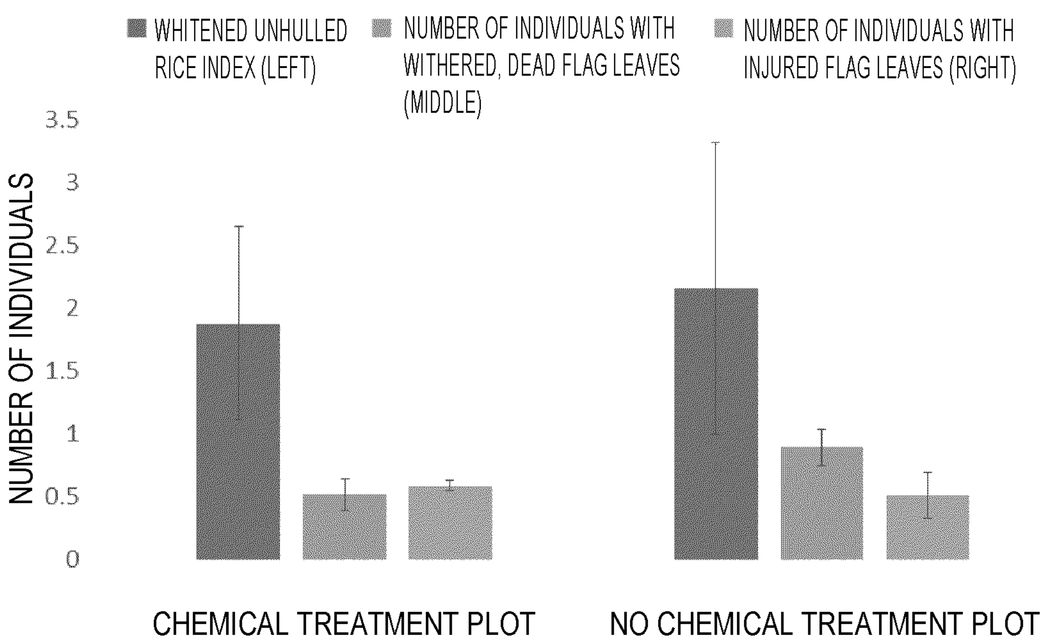
WHITENED UNHULLED RICE INDEX (LEFT)
NUMBER OF INDIVIDUALS WITH WITHERED, DEAD FLAG LEAVES (MIDDLE)
NUMBER OF INDIVIDUALS WITH INJURED FLAG LEAVES (RIGHT)
NUMBER OF INDIVIDUALS
3.5
3
2.5
2
1.5
1
0.5
0
CHEMICAL TREATMENT PLOT
NO CHEMICAL TREATMENT PLOT

[Fig. 11]

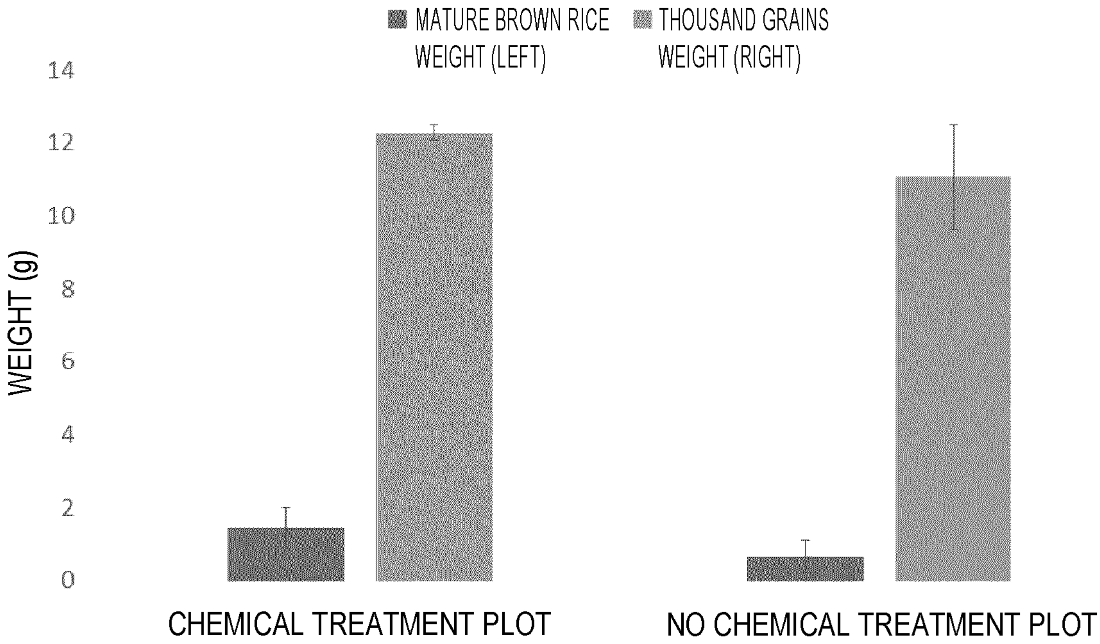
MATURE BROWN RICE WEIGHT (LEFT)
THOUSAND GRAINS WEIGHT (RIGHT)
WEIGHT (g)
14
12
10
8
6
4
2
0
CHEMICAL TREATMENT PLOT
NO CHEMICAL TREATMENT PLOT

[Fig. 12]

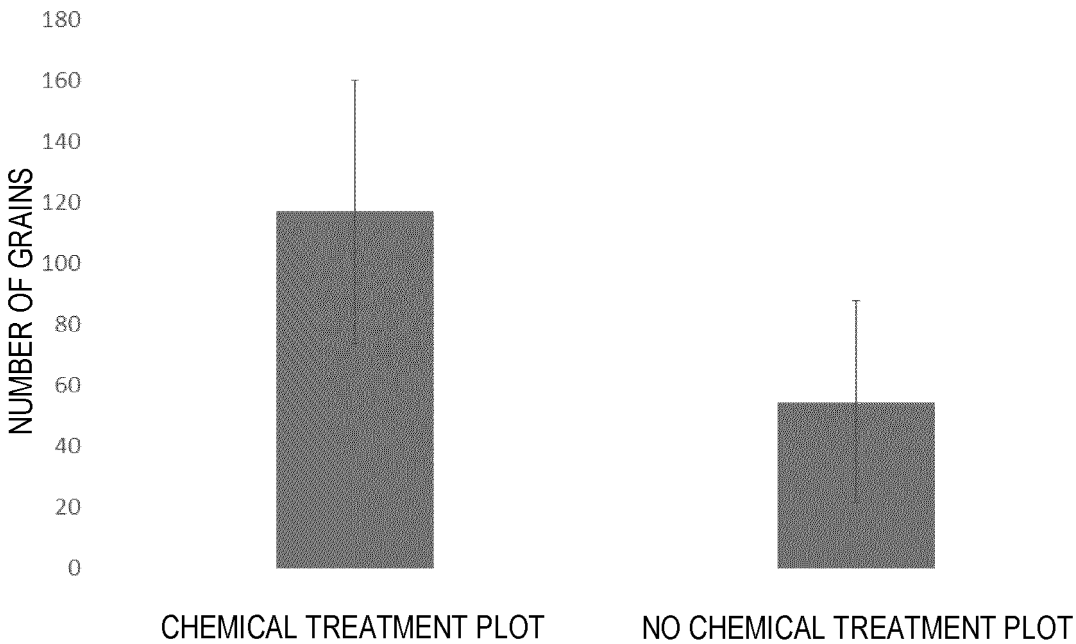
NUMBER OF GRAINS
180
160
140
120
100
80
60
40
20
0
CHEMICAL TREATMENT PLOT
NO CHEMICAL TREATMENT PLOT

[Fig. 13]

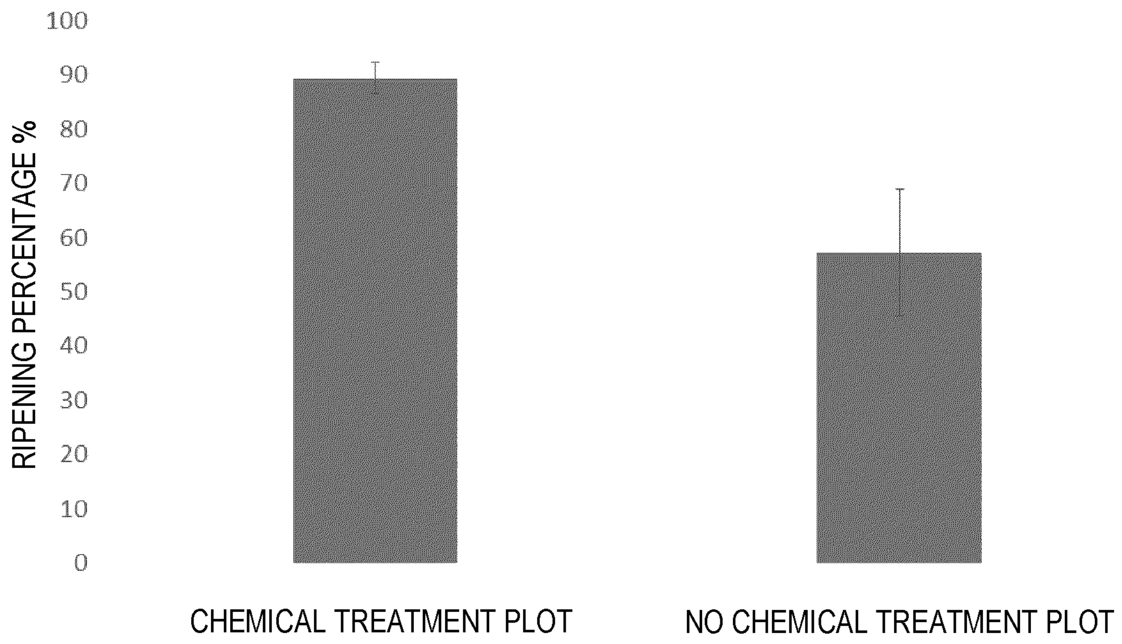
100
90
80
70
60
50
40
30
20
10
0
RIPENING PERCENTAGE %
CHEMICAL TREATMENT PLOT
NO CHEMICAL TREATMENT PLOT

[Fig. 14]

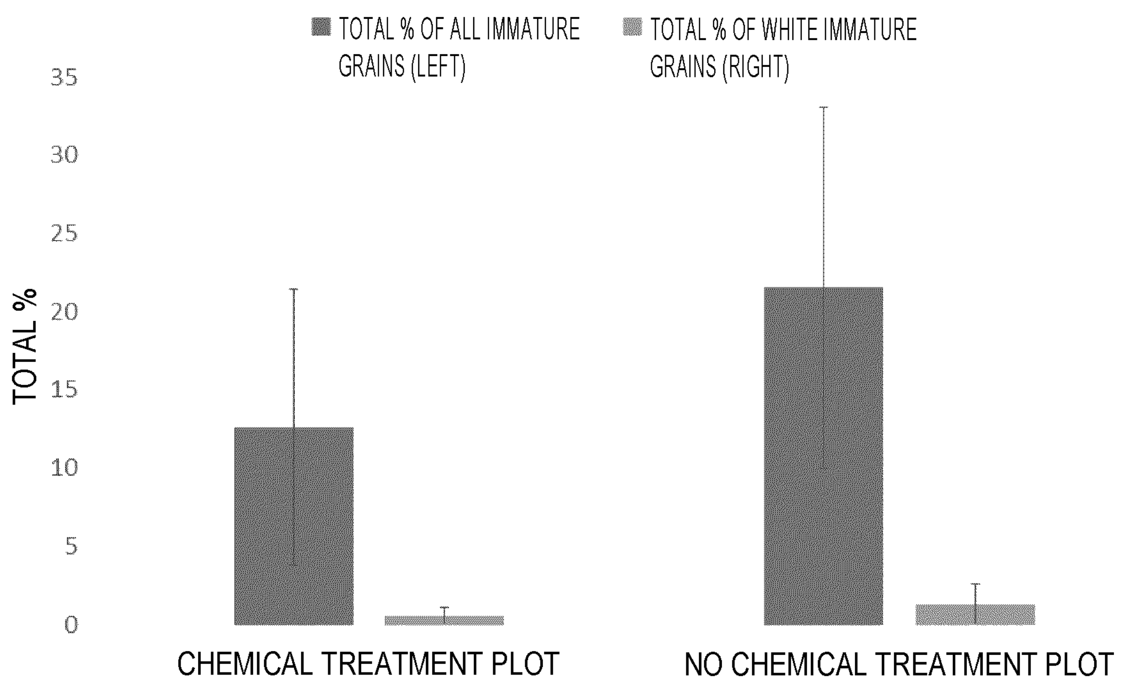
TOTAL % OF ALL IMMATURE GRAINS (LEFT)
TOTAL % OF WHITE IMMATURE GRAINS (RIGHT)
35
30
25
20
15
10
5
0
TOTAL %
CHEMICAL TREATMENT PLOT
NO CHEMICAL TREATMENT PLOT

[Fig. 15]

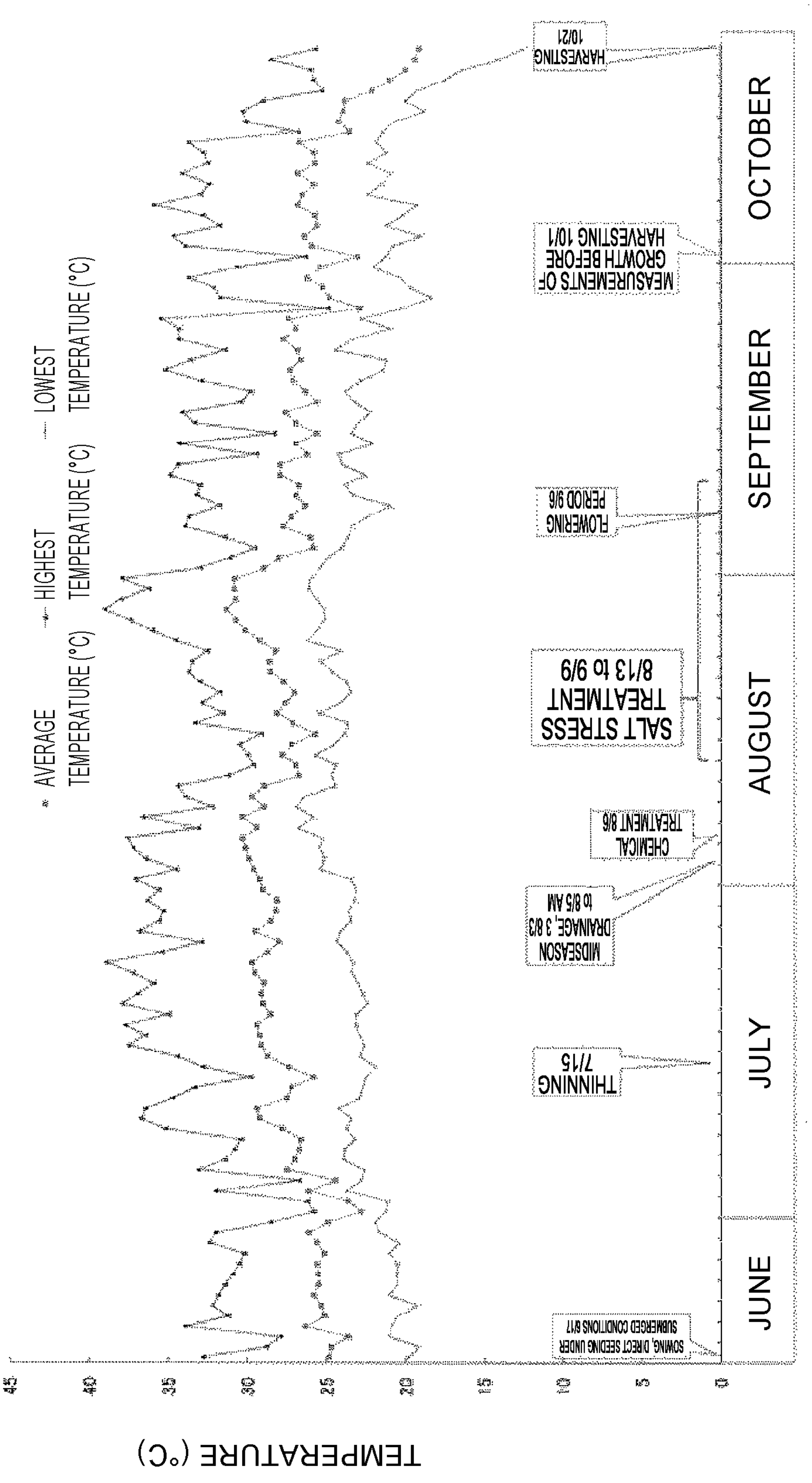
AVERAGE TEMPERATURE (°C)
HIGHEST TEMPERATURE (°C)
LOWEST TEMPERATURE (°C)
HARVESTING 10/21
MEASUREMENTS OF GROWTH BEFORE HARVESTING 10/1
FLOWERING PERIOD 9/6
SALT STRESS TREATMENT 8/13 to 9/9
CHEMICAL TREATMENT 8/6
MIDSEASON DRAINAGE, 3 8/3 to 8/5 AM
THINNING 7/15
SOWING, DIRECT SEEDING UNDER SUBMERGED CONDITIONS 6/17
OCTOBER
SEPTEMBER
AUGUST
JULY
JUNE
45
40
35
30
25
20
15
10
5
0
TEMPERATURE (°C)

**INTERNATIONAL SEARCH REPORT**

International application No.
**PCT/JP2023/008219**

**A. CLASSIFICATION OF SUBJECT MATTER**

***A01N 43/713***(2006.01)i; ***A01G 7/06***(2006.01)i; ***A01P 21/00***(2006.01)i
FI: A01N43/713; A01P21/00; A01G7/06 A

According to International Patent Classification (IPC) or to both national classification and IPC

**B. FIELDS SEARCHED**

Minimum documentation searched (classification system followed by classification symbols)

A01N43/713; A01G7/06; A01P21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 03/016303 A1 (DAINIPPON INK AND CHEMICALS, INC) 27 February 2003 (2003-02-27) entire text, all drawings, in particular, claims, general formula (I), examples | 1-5 |
| A | WO 2010/001563 A1 (NIPPON SODA CO., LTD.) 07 January 2010 (2010-01-07) entire text, all drawings, in particular, claims, formula (I), examples | 1-5 |
| A | EP 3054014 A2 (BASF PLANT SCIENCE COMPANY GMBH) 10 August 2016 (2016-08-10) entire text, all drawings, in particular, claims, compound (K.142) | 1-5 |
| A | CN 106922695 A (JIANGSU ROTAM CHEMISTRY CO., LTD.) 07 July 2017 (2017-07-07) entire text, all drawings, in particular, examples | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/008219**

| Patent document cited in search report | Publication date (day/month/year) | Patent family member(s) | Publication date (day/month/year) |
|---|---|---|---|
| WO 03/016303 A1 | 27 February 2003 | US 2005/0070439 A1<br>entire text, all drawings, in particular, claims, general formula (I), examples<br>EP 1426371 A1<br>CN 1553907 A | |
| WO 2010/001563 A1 | 07 January 2010 | KR 10-2011-0009725 A<br>entire text, all drawings, in particular, claims, formula (I), examples<br>CN 102076218 A | |
| EP 3054014 A2 | 10 August 2016 | (Family: none) | |
| CN 106922695 A | 07 July 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022034791 A
- WO 2019163946 A1
- WO 2010001563 A1
- WO 03016303 A1


### Non-patent literature cited in the description


- Graphical representation of stereochemical configuration. *Pure and Applied Chemistry*, 2006, vol. 78, 1897-1970